# EUROPÄISCHE PATENTSCHRIFT

(11) **EP 0 341 540 B1**
(45) Veröffentlichungstag und Bekanntmachung des Hinweises auf die Patenterteilung: **13.01.1993**
(21) Anmeldenummer: 89107887.5
(22) Anmeldetag: 29.04.1989
(51) Int. Cl.: C08F 6/26, C08F 210/02

(54) **Verfahren zur Niederdruckcopolymerisation von Ethylen mit alpha-Olefinen und Ethylencopolymerisate mit niederem Restmonomerengehalt**
Process for the low-pressure copolymerization of ethylene with alpha-olefines, and ethylene copolymerisates having a very little non-reacted monomer content
Procédé de copolymérisation d'éthylène et d'alpha-oléphines à basse pression et copolymères d'éthylène contenant peu de monomères n'ayant pas réagi

(30) Priorität: 06.05.1988 DE 3815487
(43) Veröffentlichungstag der Anmeldung: 15.11.1989
(73) Patentinhaber: BASF Aktiengesellschaft, 67063 Ludwigshafen (DE)
(72) Erfinder: Borho, Klaus, Dr., D-6704 Mutterstadt (DE); Bullack, Horst, D-5047 Wesseling (DE); Hauss, Alfred Friedrich, Dr., D-6700 Ludwigshafen (DE); Hennenberger, Peter, Dr., D-6713 Freinsheim (DE); Hilligardt, Klaus, Dr., D-6700 Ludwigshafen (DE); Knauer, Benno, D-6700 Ludwigshafen (DE); Rizk, Farid, Prof. Dr., D-6708 Neuhofen (DE); Vogt, Heinz, Dr., D-6700 Ludwigshafen (DE)

(56) Entgegenhaltungen:
- EP-A- 0 068 146
- EP-A- 0 127 253

## Beschreibung

Die Erfindung betrifft ein Verfahren zur kontinuierlichen Herstellung von Ethylen-α-Olefin-Copolymeristen durch katalytische Trockenphasencopolymerisation der Monomeren bei Drücken von 10 bis 60 bar und Temperaturen von 40 bis 120°C in einer gerührten oder gewirbelten Polymerisationszone, Überführen des entstandenen Gemischs aus festem Copolymerisat und nicht umgesetzten gasförmigen Monomeren in eine Entspannungszone, Auftrennen des Gemischs nach Druckreduzierung in eine gasförmige Phase (I) und eine feste Phase (II) und Rückführung der Monomeren. Die Erfindung betrifft ferner Ethylencopolymerisate mit niedrigem Restmonomerengehalt.

Bei derartigen Verfahren werden Niederdruckolefincopolymerisate erhalten, die von im Copolymerisat gelösten Monomeren weitgehend befreit sind und deren Eigengeruch gering ist.

Die Entfernung der nicht einpolymerisierten Monomeren aus den Polymerisaten ist aus ökologischen, ökonomischen sowie sicherheitstechnischen Gründen unbedingt erforderlich, da Die Monomeren die Umwelt belasten, in Gegenwart von Luftsauerstoff explosionsfähige Gemische ausbilden können, die Produktqualität durch ihren Eigengeruch mindern und durch fehlende Rückgewinnung dieser Einsatzstoffe die Endprodukte wesentlich verteuern würden.

Die Reinigung der Olefinpolymerisate von anhaftenden Monomeren, Geruchsstoffen bzw. von Suspensions- oder Lösungsmitteln ist seit längerem bekannt. So kann zur Entfernung der flüchtigen Kohlenwasserstoffe ein Inertgasstrom aus Kohlendioxid oder Stickstoff verwendet werden (vgl. US-A-3 152 872), das Endprodukt kann mit flüssigem Olefin gewaschen werden (vgl. US-A-4 214 063) oder es kann das Entgasen des Polyolefinpulvers mit gesättigten aliphatischen Kohlenwasserstoffen vorgenommen werden (vgl. Chemical Abstracts 103, 1985, 54 599 r). Diese bekannten Verfahren weisen den Nachteil auf, daß die Entfernung der Restmonomeren bzw. Restmonomeren und des Suspensionsmittels nur im beschränkten Umfang gelingt und daß es sich um aufwendige und kostenintensive Verfahren handelt.

In der US-A-4 258 158 ist ein Verfahren zum Abtrennen von nicht polymerisierten gasförmigen Monomeren zusammen mit alkanischen Kohlenwasserstoffen beschrieben, wobei das Polymerisat im Gegenstromverfahren mit einem Inertgasstrom behandelt wird. Durch Komprimieren und Kühlen des sich bildenden Inertgas-/Kohlenwasserstoff-Gemisches werden in weiteren aufwendigen Verfahrensschritten die Kohlenwasserstoffe auskondensiert und nach fraktionierter Destillation in den Reaktionsraum zurückgeführt.

Aus der GB-A-1 272 778 ist ein Verfahren zum Entgasen von Polyethylengrieß mit Inertgas ohne Rückgewinnung der nicht polymerisierten Momonomeren bekannt. Dieses Verfahren belastet durch die Kohlenwasserstoffemission die Umwelt und verteuert durch die fehlende Wiedergewinnung der dem Polymerisat anhaftenden Monomeren die Produkte.

In der US-A-4 372 758 ist ein Verfahren zur Entgasung von Polyethylengrieß mit Inertgas ohne Rückgewinnung der ausgetriebenen Monomeren beschrieben.

In EP-A-0 312 948 ist ein Verfahren zur Entfernung von Suspensionsmittel und von nichtumgesetzten Monomeren vorgeschlagen, bei dem die Restanteile nach Durchschleusen durch eine Entspannungszone in einer Trocknungszone durch Einleiten eines Inertgasstroms entfernt werden. Ein derartiges Verfahren zur gleichzeitigen Entfernung relativ großer Mengen Suspensionsmittel ist bei Olefinpolymerisaten, die durch Trockenphasenpolymerisation hergestellt wurden, nicht erforderlich.

Schließlich ist aus der EP-B1-0 127 253 ein Verfahren zur Entfernung zurückbleibender Monomere aus festen Ethylencopolymerisaten bekannt, bei dem das feste Copolymerisat einem reduzierten Druck unterzogen und dann mit Reaktorgas oder einer Komponente des Reaktorgases, das im wesentlichen frei von Inertgasen ist, behandelt wird. Auch dieses Verfahren ist nicht geeignet, den Restmonomerengehalt des Copolymisats nahezu vollständig zu beseitigen.

Aufgabe der vorliegenden Erfindung war es, ein katalytisches Trockenphasenpolymerisationsverfahren der eingangs definierten Art aufzufinden, bei dem die feste Phase (II) wirtschaftlich und unweltschonend so aufgearbeitet wird, daß die dem Copolymerisat anhaftenden nicht umgesetzten Monomeren unter gleichzeitiger Beseitigung der dem Copolymerisat noch anhaftenden restlichen Geruchs- und Geschmacksstoffen in unmittelbar für das Verfahren selbst wieder verwertbarer Form anfallen.

Eine weitere Aufgabe war es, ein Ethylencopolymerisat zur Verfügung zu stellen, das von Restmonomeren, Geruchs- und Geschmacksstoffen weitestgehend befreit ist.

Diese Aufgaben wurden durch Verfahren der eingangs definierten Art gelöst, wobei die feste Phase (II) kontinuierlich mit gasförmigem Ethylen vorgespült und anschließend mit einem Gemisch aus Stickstoff und Wasserdampf nachgespült wird.

Bevorzugt wird die beim Vorspülen der festen Phase (II) entstandene Gasphase (III) zusammen mit der Gasphase (I) in das Polymerisationssystem zurückgeführt.

Bevorzugt wird ferner die Vorspülung der festen Phase (II) bei der im Polymerisationssystem herrschenden Temperatur und bei 0,1 bis 3 bar Überdruck vorgenommen.

Bevorzugt ist auch ein Verfahren, bei dem die festen Phase (II) bei 0,05 bis 3 bar Überdruck und bei einer Temperatur zwischen 40 und 120°C mit Wasserdampf angereichertem Stickstoff nachgespült wird.

Besonders bevorzugt wird die feste Phase (II) jeweils im Gegenstrom mit den Spülgasen durchgespült.

Die Aufgabe wird ferner gelöst durch Ethylencopolymerisate, die weitestgehend von Restmonomeren, Geruchs- und Geschmackstoffen befreit sind und die nach einem der obigen Verfahren hergestellt worden sind.

Verfahren der eingangs definierten Art sind so bekannt, daß sich eine ausführliche Beschreibung erübrigt (vgl. z.B. Ullmanns Encyklopädie der technischen Chemie, 4. Auflage, 1980, Band 19, Seiten 178 bis 186 oder Encyclopedia of Polymer Science and Engineering. 2. Auflage, 1986, Band 6, Seiten 436 bis 438).

Die beim Verfahren einzusetzenden Stoffe sind die einschlägig üblichen. Dies gilt für die Monomeren, wie insbesondere Ethylen, Propylen, Buten-1, Hexen-1, 4-Methylpenten-1 oder Okten-1. Das nämliche gilt auch für die Katalysatoren, sie sind in der Regel vom Phillipstyp oder insbesondere vom Zieglertyp in Kombination mit metallorganischen Aluminiumverbindungen. Gleiches gilt auch für das zum Nachspülen der festen Phase dienende Gemisch aus Wasserdampf und Stickstoff. Der Gehalt der im Ethylencopolymerisat einpolymerisierten Comonomeren liegt im allgemeinen zwischen 1 und 20 Gew.%.

Die für das Verfahren erforderlichen Vorrichtungen, wie Polymerisationsreaktoren, Zu- und Abgangsorgane, Ventile zur Druckminderung (Entspannungsventile), Entspannungs- und Spülbehälter, Pumpen und Kompressoren für die Druckerhöhung und zur Förderung, Kondensatoren und Trockner weisen wiederum an sich keine Besonderheiten auf und gehören zum wohlbekannten Stand der Technik.

Insgesamt läßt sich sagen, daß das Verfahren - abgesehen von seinem erfindungsgemäßen Teil - seit Jahren nicht nur in der Literatur beschrieben ist, sondern auch in der industriellen Praxis ausgeübt wird, womit sich nähere Erläuterungen des Verfahrens insoweit erübrigen.

Das Abtrennen des Gemischs aus festem Copolymerisat und nicht umgesetzten gasförmigen Monomeren erfolgt üblicherweise durch kontinuierliches Austragen des Gemischs in eine Entspannungszone, in der ein Druck von 0,1 bis 3 bar Überdruck sowie eine Temperatur von 40 bis 120°C herrscht, so daß sich ausbilden kann eine gasförmige Phase (I), die im wesentlichen aus Monomeren besteht, und eine feste Phase (II), die im wesentlichen aus Copolymerisat und 0,1 bis 8 Gew.%, bezogen auf das Gewicht des Copolymerisats, aus anhaftenden Monomeren besteht. Es ist üblich, die aus dem Polymerisat abgetrennten Monomeren in die Polymerisationszone zurückzuführen.

Ergänzend wird hierzu noch auf die eingangs zitierte Patentliteratur sowie auf die EP-A-0 174 620 hingewiesen.

Nach erfindungsgemäßem Verfahren soll die feste Phase (II) kontinuierlich mit gasförmigem Ethylen vorgespült und anschließend mit einem Gemisch aus Stickstoff und Wasserdampf nachgespült werden.

Bevorzugt ist ein Verfahren, bei dem die beim Vorspülen der festen Phase (II) entstandene Gasphase (III) zusammen mit der Gasphase (I) in das Polymerisationssystem zurückgeführt wird.

Des weiteren bevorzugt ist ein Verfahren, bei dem die Vorspülung der festen Phase (II) bei der im Polymerisationssystem herrschenden Temperatur und bei 0,1 bis 3 bar Überdruck vorgenommen wird.

Ebenfalls bevorzugt ist ein Verfahren, bei dem die feste Phase (II) bei 0,05 bis 3 bar Überdruck und bei einer Temperatur zwischen 40 und 120°C mit Wasserdampf angereichertem Stickstoff nachgespült wird.

Es ist bei dem erfindungsgemäßen Verfahren von Vorteil, wenn die feste Phase (II) jeweils im Gegenstrom mit den Spülgasen durchspült wird.

Zum erfindungsgemäßen Teil des Verfahrens ist im einzelnen folgendes zu sagen:
Aus dem Polymerisationssystem wird quasi kontinuierlich ein Gemisch aus Copolymerisat und Monomeren in einen Schachtapparat eingetragen und kontinuierlich mit dem bei dem Verfahren als Einsatzstoff benötigten Ethylen, bevorzugt im Gegenstromverfahren, gespült. Die resultierenden gasförmigen Phasen können ohne weitere Maßnahmen, wie Trennung und Reinigung der Komponenten, dem Polymerisationssystem zugeführt werden. Damit lassen sich mehr als 95 Gew.% der dem Copolymerisat anhaftenden Monomeren auf einfache und wirtschaftliche Verfahrensweise zurückgewinnen.

Hierbei hat es sich gezeigt, daß es in der Regel zweckmäßig ist, so zu arbeiten, daß das Copolymerisat auf die im Polymerisationssystem herrschende Temperatur gehalten wird. Die Strömungsgeschwindigkeit des Spülethylens, bezogen auf den freien Querschnitt des Schachtapparates, beträgt bevorzugt 0,01 m/s bis 0,1 m/s, insbesondere 0,05 m/s. Die mittlere Verweilzeit des Copolymerisates im Schachtapparat beträgt bevorzugt 10 min bis 30 min, insbesondere 20 min. Der Spülgasbedarf liegt nur bei 0,9 bis 9 Vol.%, bezogen auf das Polymerisatvolumen, vorzugsweise bei 5 Vol.%.

Das mit Ethylen behandelte Copolymerisat wird dann in einem weiteren Schachtapparat kontinuierlich mit einem Gemisch aus Wasserdampf und Stickstoff, bevorzugt im Gegenstromverfahren, nachgespült.

Dabei ist es in der Regel zweckmäßig, so zu arbeiten, daß das Copolymerisat weiterhin auf der im Reaktionsraum herrschenden Temperatur gehalten wird. Die Strömungsgeschwindigkeit des mit Wasserdampf angereicherten Stickstoffes, bezogen auf den Querschnitt des Schachtapparates, beträgt bevorzugt 0,01 m/s bis 0,05 m/s, insbesondere 0,02 m/s. Die Temperatur des Wasserdampf/Stickstoff-Gemisches ist so zu wählen, daß bei den im Schachtapparat herrschenden Drücken keine Auskondensation des Wasserdampfes im Schachtapparat eintritt.

Die mittlere Verweilzeit des Copolymerisates im Schachtapparat kann zwischen einer halben und mehreren Stunden, ohne nachteilige Wirkungen auf das Copolymerisat, variiert werden.

Durch die Kombination der beiden Verfahrensschritte - Vorspülen des Copolymerisates mit Ethylen und Nachspülen mit einem Gemisch aus Wasserdampf und Stickstoff - kann das bei der katalytischen Trockenphasencopolymerisation anfallende Copolymerisat auf einfache und schnelle Verfahrensweise von den anhaftenden Monomeren sowie zusätzlich von weiteren Geruchsstoffen befreit werden.

Es ist ein Vorteil der erfindungsgemäßen Vorgehensweise gegenüber dem bisherigen Stand der Technik, daß die effiziente Entgasung bereits bei sehr kurzen Copolymerisatverweilzeiten erfolgt. Das erfindungsgemäße Verfahren eignet sich besonders bei der Herstellung von niedrigdichten Copolymerisaten des Ethylens, da mit zunehmender Molmasse der Comonomeren, deren Löslichkeit in Copolymerisat steigt und ihre Geruchsintensität sich verstärkt.

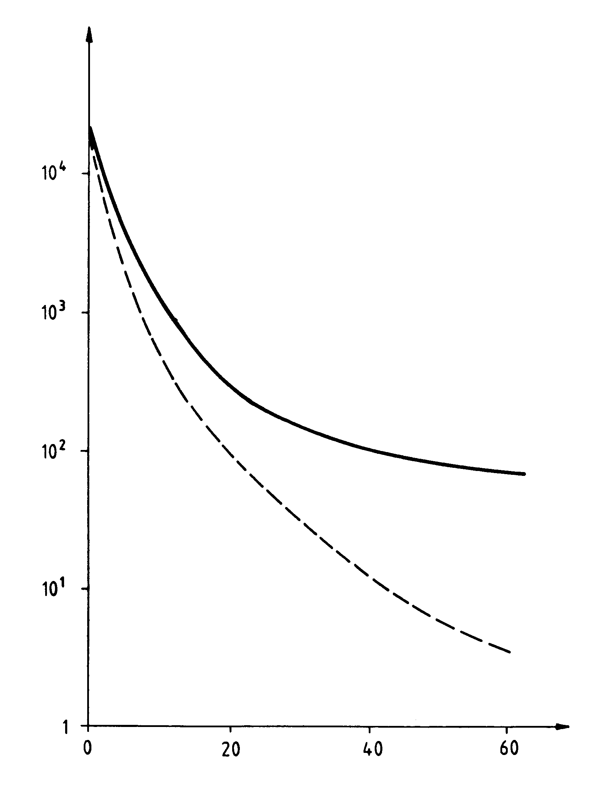

Durch die Zeichnung wird der Vorteil des erfindungsgemäßen Verfahrens verdeutlicht. Bei der Entgasung eines Ethylen-Hexen-Copolymerisats bei einer Temperatur von 75°C ist der Restmonomergehalt im Copolymerisat, gemessen in ppm, auf der Ordinate und die Gesamtentgasungszeit, gemessen in Minuten, auf der Abzisse aufgetragen, wobei durch die durchgezogene Linie die Entgasung mit Stickstoff oder Ethylen gemäß Stand der Technik und durch die gestrichelte Linie die erfindungsgemäße Entgasung mit Ethylen und anschließend mit einem Wasserdampf/Stickstoffgemisch dargestellt ist.

Die einfache Rückgewinnung der Monomeren mit über 95 Gew.% zeigt den besonderen ökonomischen Vorteil des erfindungsgemäßen Verfahrens.

### Beispiel

Die Copolymerisation wird kontinuierlich durchgeführt in einem zylindrischen Wirbelbettreaktor, der einen Durchmesser von 50 cm hat und während der Copolymerisation im kontinuierlich-stationären Zustand mit 160 kg eines kleinteiligen Copolymerisats als Polymerisationsmedium gefüllt ist.

Im einzelnen ist das Copolymerisationsverfahren derart ausgestaltet, daß
a) das Polymerisationsmedium ein Wirbelbett aus kleinteiligem Copolymerisat ist, mit den Maßgaben, daß
a₁) die Verwirbelung des Polymerisationsmediums mit einem aufwärts gerichtetem Gasstrom erfolgt, dessen Geschwindigkeit 70 cm/s beträgt;
a₂) im Polymerisationsmedium die Abfuhr der Polymerisationswärme im wesentlichen durch den zur Aufrechterhaltung des Wirbelbetts erforderlichen Gasstrom erfolgt;
b) die durch Copolymerisation verbrauchten Monomeren sowie der zur Regelung der molaren Masse des Copolymeren eingesetzte Wasserstoff kontinuierlich ergänzt werden;
c) die gewählten Bedingungen wie Druck, Temperatur und Gaszusammensetzung konstant gehalten werden;
d) die Copolymerisation bei einem Gasdruck von 20 bar bei 85°C sowie den Gewichtsverhältnissen H₂ : Ethylen von 0,17 : 1 und Hexen-1 : Ethylen von 0,19 : 1 durchgeführt wird.

Unter diesen Bedingungen wird mittels intermittierender Zugabe von 6,7 g/Stunde einer in der EP-A 0 174 620 beschriebenen Katalysatorkomponente (1) sowie 5,8 g/Stunde Triisobutylaluminium Ethylen mit Hexen-1 copolymerisiert.

Das Copolymerisat wird isoliert, indem man
1. aus dem Polymerisationsraum ein Gemisch aus im wesentlichen Copolymerisat, Ethylen, Hexen-1 und N₂ austrägt (stündlich etwa 46 kg Gemisch, das sich aus etwa 35 kg Ethylencopolymerisat, etwa 2,2 kg Hexen-1 und etwa 3,8 kg Ethylen zusammensetzt),
2. das Gemisch auf 0,5 bar Überdruck sowie eine Temperatur von 85°C bringt unter Bildung einer gasörmigen Phase (I), im wesentlichen aus Ethylen, Hexen-1 und N₂ bestehend, und einer festen Phase (II), im wesentlichen aus dem Copolymerisat mit etwa 2,5 Gew.%, bezogen auf das Gewicht des Copolymerisats, anhaftenden Hexen-1 bestehend.

Als kennzeichnend für das erfindungsgemäße Verfahren wird des weiteren so gearbeitet, daß man zusätzlich:
die feste Phase (II) kontinuierlich mit auf 85°C vorgewärmten Ethylen vorspült, unter Reduzierung des dem Copolymerisat anhaftenden Hexen-1, und Rückführung der resultierenden gasförmigen Phase (III), im wesentlichen aus Ethylen und Hexen-1 bestehend, zusammen mit der gasförmigen Phase (I) in den Polymerisationsraum.

Die feste Phase aus (II) wird dann auf 0,05 bar Überdruck sowie auf eine Temperatur von 85°C gebracht und mit einem bei 85°C und 0,1 bar Überdruck mit Wasserdampf angereichertem Stickstoff nachgespült. Die Strömungsgeschwindigkeit des Wasserdampf-/Stickstoffgemisches, bezogen auf den freien Querschnitt des Schachtapparates, beträgt dabei 0,02 m/s.

Die Verweildauer des Produktes liegt bei ca. 40 Minuten.

Die Gesamtentgasungszeit beträgt demnach 60 Minuten.

An dem Copolymerisat werden nach der erfindungsgemäßen Vorgehensweise nur noch etwa 8 ppm Hexen-1 gemessen. Der Nikolauswert beträgt 2.

### Vergleichsbeispiel

Es wird wie im oben aufgeführten Beispiel verfahren, mit dem einzigen Unterschied, daß die resultierende feste Phase aus (II) bei 0,05 bar Überdruck und 75°C 60 Minuten lang nur mit N₂ gespült wird. Die Strömungsgeschwindigkeit des N₂, bezogen auf den freien Querschnitt des Schachtapparates, beträgt 0,05 m/s.

An dem Copolymerisat werden noch etwa 90 ppm Hexen-1 gemessen. Der Nikolauswert (der Nikolauswert stellt ein Maß für die Geruchsintensität des Copolymerisates dar, dabei ergeben die niedrigsten Werte die geringste Geruchsintensität) beträgt 3,5.

## Patentansprüche

1. Verfahren zur kontinuierlichen Herstellung von Ethylen-α-Olefin-Copolymerisaten durch katalytische Trockenphasencopolymerisation der Monomeren bei Drücken von 10 bis 60 bar und Temperaturen von 40 bis 120°C in einer gerührten oder gewirbelten Polymerisationszone, Überführen des entstandenen Gemischs aus festem Copolymerisat und nicht umgesetzten gasförmigen Monomeren in eine Entspannungszone, Auftrennen des Gemisches nach Druckreduzierung in eine gasförmige Phase (I) und eine feste Phase (II) und Rückführen der Monomeren, dadurch gekennzeichnet, daß die feste Phase (II) kontinuierlich mit gasförmigem Ethylen vorgespült und anschließend mit einem Gemisch aus Stickstoff und Wasserdampf nachgespült wird.

2. Verfahren nach Anspruch 1, dadurch gekennzeichnet, daß die beim Vorspülen der festen Phase (II) entstandene Gasphase (III) zusammen mit der Gasphase (I) in das Polymerisationssystem zurückgeführt wird.

3. Verfahren nach Anspruch 1, dadurch gekennzeichnet, daß die Vorspülung der festen Phase (II) bei der im Polymerisationssystem herrschenden Temperatur und bei 0,1 bis 3 bar Überdruck vorgenommen wird.

4. Verfahren nach Anspruch 1, dadurch gekennzeichnet, daß die feste Phase (II) bei 0,05 bis 3 bar Überdruck und bei einer Temperatur zwischen 40 und 120°C mit Wasserdampf angereichertem Stickstoff nachgespült wird.

5. Verfahren nach Anspruch 1, dadurch gekennzeichnet, daß die feste Phase (II) jeweils im Gegenstrom mit den Spülgasen durchgespült wird.

## Claims

1. A process for the continuous preparation of an ethylene/α-olefin copolymer by catalytic dry-phase copolymerization of the monomers under from 10 to 60 bar and at from 40 to 120°C in a stirred or fluidized polymerization zone, transfer of the resulting mixture of solid copolymer and unconverted gaseous monomers into a let-down zone, separation of the mixture, after pressure reduction, into a gaseous phase (I) and a solid phase (II) and recycling of the monomers, wherein the solid phase (II) is continuously flushed beforehand with gaseous ethylene and then flushed with a mixture of nitrogen and steam.

2. A process as claimed in claim 1, wherein the gas phase (III) formed during preliminary flushing of the solid phase (II) is recycled together with the gas phase (I) to the polymerization system.

3. A process as claimed in claim 1, wherein preliminary flushing of the solid phase (II) is carried out at the temperature prevailing in the polymerization system and under from 0.1 to 3 bar gage pressure.

4. A process as claimed in claim 1, wherein the solid phase (II) is subsequently flushed with steam-enriched nitrogen under from 0.05 to 3 bar gage pressure and at from 40 to 120°C.

5. A process as claimed in claim 1, wherein the solid phase (II) is flushed with the flushing gases in each case by the counter-current method.

## Revendications

1. Procédé de fabrication continue de copolymères de l'éthylène et d'alpha-oléfines par copolymérisation catalytique en phases sèches des monomères à des pressions de 10 à 60 bars et des températures de 40 à 120°C dans une zone de polymérisation agitée ou turbulente ou fluidisée, transfert du mélange formé de copolymère solide et de monomères gazeux non convertis dans une zone de détente, séparation du mélange après réduction de pression en une phase gazeuse (I) et une phase solide (II) et recyclage des monomères, caractérisé en ce que l'on soumet la phase solide (II) en continu à un rinçage préalable avec de l'éthylène gazeux et ensuite à un rinçage subséquent avec un mélange constitué d'azote et de vapeur d'eau.

2. Procédé suivant la revendication 1, caractérisé en ce que lors du rinçage préalable de la phase solide (II), on renvoie la phase gazeuse formée (III) en même temps que la phase gazeuse (I) dans le système de polymérisation.

3. Procédé suivant la revendication 1, caractérisé en ce que l'on entreprend le rinçage préalable de la phase solide (II) à la température qui règne dans le système de polymérisation à une surpression de 0,1 à 3 bars.

4. Procédé suivant la revendication 1, caractérisé en ce que l'on procède au rinçage subséquent de la phase solide (II) à une surpression de 0,05 à 3 bars et à une température variant de 40 à 120°C, avec de l'azote enrichi en vapeur d'eau.

5. Procédé suivant la revendication 1, caractérisé en ce que l'on rince intimement la phase solide (II), à chaque fois en contre-courant avec les gaz de rinçage.
